# EUROPEAN PATENT APPLICATION

(11) **EP 2 048 342 A2**
(43) Date of publication of application: **15.04.2009**
(21) Application number: 08016721.6
(22) Date of filing: 23.09.2008
(51) Int. Cl.: F02D 41/02, F02D 41/40, F01N 3/023, F01N 9/00

(54) **Late post-injection fueling strategy in a multi-cylinder diesel engine during regenerating of an exhaust after-treatment device**

(30) Priority: 08.10.2007 US 868730
(71) Applicant: International Engine Intellectual Property Company, LLC., Warrenville, IL 60555 (US)
(72) Inventor: Wu, Shouhao, Roselle, IL 60172 (US); Ptak, Richard, Woodstock, IL 60098 (US)
(74) Representative: Kuhnen & Wacker

(57) **Abstract**

A strategy for late post-injection fueling in a diesel engine (10) that can mitigate scuffing and wear due to cylinder wall washing by late post-injected fuel that is needed for regenerating an exhaust after-treatment device (38).

## Description

### Field of the Invention

This invention relates generally to internal combustion engines, especially compression ignition (i.e. diesel) engines. More specifically, the invention relates to a strategy for late post-injection of fuel while an exhaust after-treatment device is being regenerated.

### Background of the Invention

Examples of after-treatment devices for treating exhaust gas passing through an exhaust system of a diesel engine are a diesel particulate filter (DPF) and a NOx adsorber catalyst. After-treatment devices promote chemical reactions and/or trap particulate matter in exhaust flowing through the exhaust system from the engine, thereby preventing significant amounts of pollutants such as hydrocarbons, carbon monoxide, soot, SOF, and ash, from entering the atmosphere.

These after-treatment devices typically require regeneration from time to time in order to keep them effective and prevent them for becoming ineffective and/or even detrimental to engine performance due to the matter that they collect. For example, trapped soot in a DPF must be burned off before it restricts exhaust flow to such an extent that it causes engine back-pressure to increase to undesired levels.

One way to create conditions for initiating and sustaining regeneration of a DPF involves elevating the temperature of exhaust gas entering the DPF to a sufficently high temperature to bum off trapped soot. Because a diesel engine typically runs relatively cool and lean, the late post-injection of diesel fuel can be used as part of a strategy to elevate temperature of exhaust gas entering the DPF while still leaving excess oxygen for burning the trapped particulate matter. Late post-injection of fuel into an engine cylinder during an expansion stroke conditions the exhaust with additional unburned fuel. An oxidation catalyst ahead of the DPF promotes combustion of the post-injected fuel, sufficiently elevating the temperature of exhaust entering the DPF to initiate and sustain regeneration of the DPF.

The nature of conventional diesel combustion comprises a main injection of fuel into an engine cylinder when the piston that reciprocates in the cylinder arrives essentially at top dead center (TDC) at the end of a compression stroke. The fuel injector may inject diesel fuel as one or more directed streams that are aimed toward a bowl in the piston head when the piston is essentially at TDC. The injected fuel combusts to force the piston away from the fuel injector. Late in the expansion downstroke, the piston is moving away from the fuel injector over a range of positions that are out of the way of the paths that injected fuel stream from the fuel injector would follow and the gas density in the cylinder has been significantly reduced.

### Summary of the Invention

The inventors have observed that as a consequence of this combustion chamber geometry, the late post-injection of diesel fuel needed to create conditions for regeneration of an exhaust treatment device may cause one or more injected fuel streams to miss the down-stroking piston and instead hit the cylinder wall. This can result in the diesel fuel washing the film of engine motor oil on the cylinder wall.

During the ensuing exhaust upstroke, rings of the upstroking piston will wipe across zones of the cylinder wall that may have been washed. The reduced lubricity in those zones due to the prior washing may promote scuffing and wear that would not occur in the absence of such late post-injections.

In the absence of the present invention, it seems a virtual certainty that every engine cycle of every cylinder would have its cylinder wall washed to some extent by late post-injected diesel fuel.

Briefly, the present invention relates to a strategy for late post-injection fueling that can mitigate scuffing and wear due to cylinder wall washing by late post-injected fuel that is needed for regenerating an exhaust after-treatment device.

The strategy is embodied in the engine control system as a programmed algorithm that is repeatedly executed by a processor.

One generic aspect of the present invention relates to a method of late post-injection of diesel fuel into cylinders of a multi-cylinder diesel engine for creating exhaust, which during passage through an exhaust system that includes an after-treatment device, is effective to regenerate the after-treatment device. During a series of main combustion events that occur in succession in a group of cylinders in a repetitive engine cycle for the cylinders, a late post-injection control strategy causes a late post-injection of diesel fuel into at least one but fewer than all cylinders of the group.

Another generic aspect of the invention relates to a diesel engine comprising engine cylinders within which diesel fuel is combusted, an exhaust system, including an after-treatment device, through which exhaust resulting from in-cylinder combustion passes, and a control system for controlling injection of diesel fuel into the cylinders, including main injections and late post-injections of diesel fuel. The control system contains a strategy for late post-injections of diesel fuel to create exhaust suitable for regenerating the after-treatment device, and when executing the strategy, causes a late post-injection of diesel fuel into at least one but fewer than all cylinders of a group of cylinders during a series of main injections that occur in succession in the group of cylinders in a repetitive engine cycle.

The foregoing, along with further features and advantages of the invention, will be seen in the following disclosure of a presently preferred embodiment of the invention depicting the best mode contemplated at this time for carrying out the invention. This specification includes drawings, now briefly described as follows.

### Brief Description of the Drawings

Figure 1 is a general schematic diagram of those portions of an exemplary diesel engine relevant to principles of the present invention.

Figure 2 is a table presenting several different embodiments of the inventive strategy.

### Description of the Preferred Embodiment

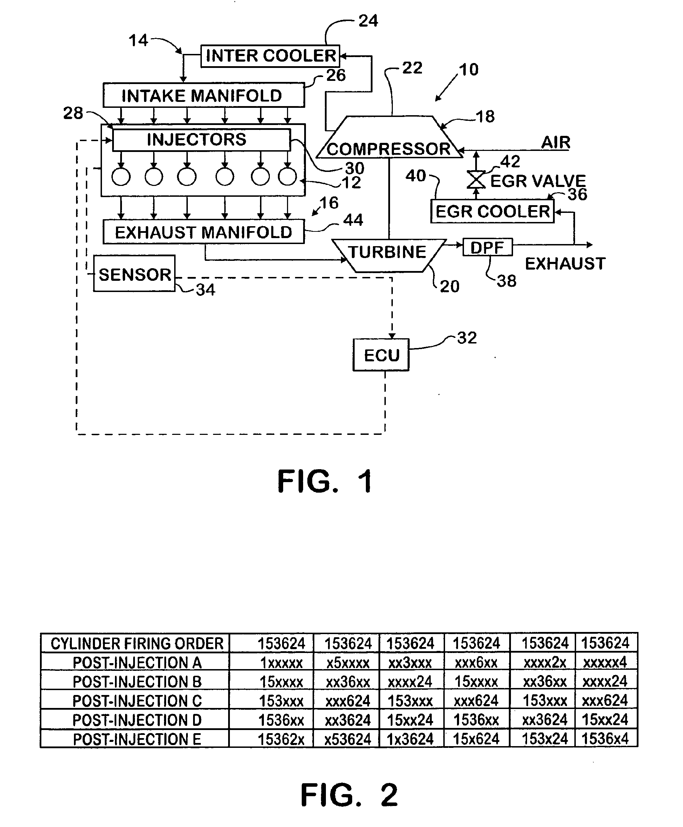

Figure 1 shows schematically a portion of an exemplary turbocharged diesel engine 10 for powering a motor vehicle. Engine 10 comprises six cylinders 12 within which pistons reciprocate. Each piston is coupled to a respective throw of a crankshaft by a corresponding connecting rod. Engine 10 further comprises an intake system 14 and an exhaust system 16. Turbocharging is provided by a turbocharger 18 having a turbine 20 in exhaust system 16 that operates a compressor 22 in intake system 14.

Intake system 14 further comprises an intercooler 24 downstream of compressor 22 for cooling charge air that has been drawn into intake system 14 and compressed by compressor 22. From intercooler 24 the charge air is introduced into an engine intake manifold 26 that serves cylinders 12. Charge air enters each cylinder when a respective intake valve is open during the engine cycle.

Engine 10 further comprises a fueling system 28 that comprises fuel injectors 30 for cylinders 12. The engine also has a processor-based engine control system or unit (ECU) 32 that processes data from various sources to develop various control data for controlling various aspects of engine operation. The data processed by ECU 32 may originate at external sources, such as various sensors 34, and/or be generated internally. Examples of data processed may include engine speed, intake manifold pressure, exhaust manifold pressure, fuel injection pressure, fueling quantity and timing, mass airflow, and accelerator pedal position.

Engine 10 further comprises a low-pressure EGR system 36 that comprises an EGR cooler 40 and EGR valve 42 between exhaust system 16 and intake system 14.

A diesel particulate filter (DPF) 38 is an exhaust after-treatment device disposed in the exhaust system downstream of turbine 20.

ECU 32 controls engine fueling by controlling the operation of the fueling system 28, including controlling the operation of the fuel injectors 30. The processing system embodied in ECU 32 can process data sufficiently fast to calculate, in real time, the timing and duration of device actuation to set both the timing and the amount of each injection of fuel into a cylinder.

ECU 32 also controls regeneration of DPF 38. When ECU 32 determines a need to regenerate DPF 38 as a result of processing certain data relevant to the determination, it alters the fueling strategy to cause late post-injection of diesel fuel.

In accordance with principles of the present invention, during a series of main combustion events that occur in succession in a group of cylinders in a repetitive engine cycle for the cylinders, ECU 32 executes a late post-injection control strategy that causes a late post-injection of diesel fuel into at least one but fewer than all cylinders of the group.

The table of Figure 2 presents different implementations of the strategy. The top horizontal row of the table contains a time sequence, with time running horizontally from left to right, of six successive repetitions of the cylinder engine cycle (153624) for engine 10. This sequence repeats during regeneration.

A first example of late post-injection fueling strategy is designated "Post-Injection A". During the first occurrence of the engine cycle, a late post-injection of diesel fuel is made only into Cylinder No. 1. During the second occurrence of the engine cycle, a late post-injection of diesel fuel is made only into Cylinder No. 5. During the third occurrence of the engine cycle, a late post-injection of diesel fuel is made only into Cylinder No. 3. During the fourth occurrence of the engine cycle, a late post-injection of diesel fuel is made only into Cylinder No. 6. During the fifth occurrence of the engine cycle, a late post-injection of diesel fuel is made only into Cylinder No. 2. During the sixth occurrence of the engine cycle, a late post-injection of diesel fuel is made only into Cylinder No. 4.

According to example "Post-Injection A", during a sequence of successive repetitive occurrences of the cylinder engine cycle equal in number to the number of cylinders in a group of cylinders (six cylinders for this particular example), a late post-injection of diesel fuel is made into only a single one of cylinders 12 during each repetition of the engine cycle, and during the sequence no cylinder receives more than one late post-injection of diesel fuel.

It is also to be noticed that during the sequence of "Post-Injection A", successive late post-fuel injections of diesel fuel are made in respective cylinders in the same order as in the engine cycle, namely a late post-injection in cylinder No. 1 during the first occurrence of the engine cycle, a late post-injection in cylinder No. 5 during the second occurrence of the engine cycle, .. etc.

The example "Post-Injection B" contains two successive identical sequences, each having three successive repetitions of the engine cycle. The number of repetitions in each sequence is equal to one-half the number of six cylinders in the group. According to "Post-Injection B", during each of the two identical sequences, a late post-injection of diesel fuel is made into each of two cylinders 12 during each of three successive repetitions of the engine cycle, and each of the six cylinders receives only one late post-injection of diesel fuel over the course of the three successive repetitions of the engine cycle in each of the two sequences. It should also be noticed that during each repetition of the engine cycle, the two late post-injections of diesel fuel occur in successive cylinders in the engine cycle.

The example "Post-Injection C" shows three consecutive identical sequences from left to right. Each sequence comprises two repetitions of the engine cycle, making the number of repetitions in each sequence equal to one-third the number of six cylinders in the group. This example is somewhat similar to example "Post-Injection B" in that during each repetition of the engine cycle, a late post-fuel injection of diesel fuel is made into each of three successive cylinders in the engine cycle while no late post-injection of diesel fuel is made into the other three cylinders. The two consecutive repetitions of the engine cycle in each of the three sequences cause every cylinder to receive exactly one late post-injection of diesel fuel during the respective sequence.

The example "Post-Injection D" shows that during each repetition of the engine cycle, each of four different cylinders receives a late post-fuel injection of diesel fuel, but not the other two. The post-injections during each repetition of the engine cycle are not always consecutive, as shown by the third and sixth repetitions.

The example "Post-Injection E" shows that during each repetition of the engine cycle, each of five different cylinders receives a late post-fuel injection of diesel fuel, but not the other one. The post-injections during each repetition of the engine cycle are not always consecutive, as shown by the third through sixth repetitions.

During the progress of an on-going regeneration, a control strategy may change late post-injection from one example to another, and may even use a strategy that is not specifically shown by the examples of Figure 2. The quantity and the specific timing of late post-injected fuel may also change depending on factors related to engine operation and the state of regeneration progress. Also a post-injection may comprise either a single fuel pulse or multiple fuel pulses. It is to be appreciated that principles of the invention disclosed in the examples presented here apply to any multi-cylinder engine.

While a presently preferred embodiment of the invention has been illustrated and described, it should be appreciated that principles of the invention apply to all embodiments falling within the scope of the following claims.

## Claims

1. A method of late post-injection of diesel fuel into cylinders of a multi-cylinder diesel engine for creating exhaust, which during passage through an exhaust system that includes an after-treatment device, is effective to regenerate the after-treatment device, the method comprising:
during a series of main combustion events that occur in succession in a group of cylinders in a repetitive engine cycle for the cylinders, executing a late post-injection control strategy that causes a late post-injection of diesel fuel into at least one but fewer than all cylinders of the group.

2. A method as set forth in Claim 1 wherein during a sequence of successive repetitions of the engine cycle equal in number to the number of cylinders in the group, a late post-injection of diesel fuel is made into only a single cylinder during each repetition of the engine cycle, and during the sequence no cylinder receives more than one late post-injection of diesel fuel.

3. A method as set forth in Claim 2 wherein during the sequence, successive late post-fuel injections of diesel fuel are made into cylinders in the same order as the engine cycle.

4. A method as set forth in Claim 1 wherein during a sequence of successive repetitions of the engine cycle equal in number to one-half the number of cylinders in the group, a late post-fuel injection of diesel fuel is made into each of multiple cylinders during each repetition of the engine cycle, and during the sequence no cylinder receives more than one late post-injection of diesel fuel.

5. A method as set forth in Claim 1 wherein during a sequence of successive repetitions of the engine cycle equal in number to one-third the number of cylinders in the group, a late post-fuel injection of diesel fuel is made into each of multiple cylinders during each repetition of the engine cycle, and during the sequence no cylinder receives more than one late post-injection of diesel fuel.

6. A method as set forth in Claim 1 wherein during a sequence of successive repetitions of the engine cycle equal in number to the number of cylinders in the group, a late post-injection of diesel fuel is made into each of more than one-half the number of cylinders in the group during each repetition.

7. A method as set forth in Claim 6 wherein during each repetition of the engine cycle, the late post-injections of diesel fuel are made into respective cylinders in succession in the same order as the engine cycle.

8. A diesel engine comprising:
engine cylinders within which diesel fuel is combusted;
an exhaust system, including an after-treatment device, through which exhaust resulting from in-cylinder combustion passes;
a control system for controlling injection of diesel fuel into the cylinders, including main injections and late post-injections of diesel fuel, wherein the control system contains a strategy for late post-injections of diesel fuel to create exhaust suitable for regenerating the after-treatment device, and when executing the strategy, causes a late post-injection of diesel fuel into at least one but fewer than all cylinders of a group of cylinders during a series of main injections that occur in succession in the group of cylinders in a repetitive engine cycle.

9. A diesel engine as set forth in Claim 8 wherein during a sequence of successive repetitions of the engine cycle equal in number to the number of cylinders in the group, execution of the strategy causes a late post-injection of diesel fuel to be made into only a single cylinder during each repetition of the engine cycle and no cylinder to receive more than one late post-injection of diesel fuel during the sequence.

10. A diesel engine as set forth in Claim 9 wherein execution of the strategy during the sequence causes successive late post-fuel injections of diesel fuel to be made into respective cylinders in the same order as the engine cycle.

11. A diesel engine as set forth in Claim 8 wherein during a sequence of successive repetitions of the engine cycle equal in number to one-half the number of cylinders in the group, execution of the strategy causes a late post-fuel injection of diesel fuel to be made into each of multiple cylinders during each repetition of the engine cycle and no cylinder to receive more than one late post-injection of diesel fuel.

12. A diesel engine as set forth in Claim 8 wherein during a sequence of successive repetitions of the engine cycle equal in number to one-third the number of cylinders in the group, execution of the strategy causes a late post-fuel injection of diesel fuel to be made into each of multiple cylinders during each repetition of the engine cycle and during the sequence no cylinder to receive more than one late post-injection of diesel fuel.

13. A diesel engine as set forth in Claim 8 wherein during a sequence of successive repetitions of the engine cycle equal in number to the number of cylinders in the group, execution of the strategy causes a late post-injection of diesel fuel to be made into each of more than one-half the number of cylinders in the group during each repetition.

14. A diesel engine as set forth in Claim 13 wherein during each repetition of the engine cycle, execution of the strategy causes the late post-injections of diesel fuel to be made into respective cylinders in succession in the same order as the engine cycle.
